# EUROPEAN PATENT APPLICATION

(11) **EP 4 572 204 A1**
(43) Date of publication of application: **18.06.2025**
(21) Application number: 23851499.6
(22) Date of filing: 03.07.2023
(51) Int. Cl.: H04L 5/00, H04W 36/00

(54) **INFORMATION RECEIVING METHOD AND APPARATUS, INFORMATION SENDING METHOD AND APPARATUS, AND DEVICE AND STORAGE MEDIUM**

(30) Priority: 08.08.2022 CN 202210946214
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: ZUO, Jun, Beijing 100053 (CN); XIE, Fang, Beijing 100053 (CN); TANG, Xiaoxuan, Beijing 100053 (CN)
(74) Representative: Maiwald GmbH
(86) International application number: PCT/CN2023/105560
(87) International publication number: WO 2024/032273

(57) **Abstract**

Disclosed in the present application are an information receiving method and apparatus, an information sending method and apparatus, and a device and a storage medium. The information receiving method comprises: acquiring first information, the first information being carried by a media access control (MAC) control element (CE) or downlink control information (DCI), wherein the first information is used for indicating at least one of the following: whether to switch to a first cell; whether to activate a radio resource control (RRC) configuration of the first cell; whether to bring the RRC configuration of the first cell into effect; and the first cell is a candidate target cell.

## Description

### CROSS-REFERENCE TO RELATED APPLICATIONS

This application is based on and claims priority to Chinese patent application NO.202210946214.2, filed on August.8, 2022, the entire contents of which are incorporated herein by reference.

### TECHNICAL FIELD

The disclosure relates to a field of wireless communication technology, and in particular to a method and an apparatus for receiving information, a method and an apparatus for sending information, a device, and a storage medium.

### BACKGROUND

Currently, it is supported in an inter-cell beam management that a synchronization signal block (SSB) of a non-serving cell is configured as a reference signal for beam measurement. A user equipment (UE) may report a layer 1-reference signal receiving power (L1-RSRP) measurement result of the SSB of the non-serving cell, which achieves that a serving cell selects a beam from the non-serving cell to serve the UE, thus realizing an inter-cell mobility. However, a current inter-cell mobility mechanism has a large latency of the procedure.

### SUMMARY

Based on the above, embodiments of the disclosure expect to provide a method and an apparatus for receiving information, a method and an apparatus for sending information, a device, and a storage medium.

Technical solutions of the embodiments of the disclosure are implemented as follows.

An embodiment of the disclosure provide a method for receiving information, applied to a terminal. The method includes: obtaining first information, in which the first information is carried by a medium access control (MAC) control element (CE) or downlink control information (DCI); the first information indicates at least one of: whether to switch to a first cell; whether to activate a radio resource control (RRC) configuration of the first cell; or whether to apply the RRC configuration of the first cell; in which the first cell is a candidate target cell.

In addition, according to at least one embodiment of the disclosure, in the case of the first information being carried by the MAC CE, the first information includes: a cell index; or a configuration index; the cell index or the configuration index indicates a first cell to be switched to, a first cell with the RRC configuration to be activated, or a first cell with the RRC configuration to be applied.

In addition, according to at least one embodiment of the disclosure, in the case of the first information being carried by the DCI, the first information corresponds to at least one first field in the DCI.

In addition, according to at least one embodiment of the disclosure, the DCI further includes at least one second field; and the at least one second field indicates: a cell index; or a configuration index; the cell index or the configuration index indicates a first cell to be switched to, a first cell with the RRC configuration to be activated, or a first cell with the RRC configuration to be applied.

In addition, according to at least one embodiment of the disclosure, the method further includes: sending second information to a network equipment, in which the second information is a response message to the first information.

In addition, according to at least one embodiment of the disclosure, in the case of the first information being carried by the MAC CE, the second information is sent via the MAC CE; in the case of the first information being carried by the DCI, a resource used to send the second information is indicated via the DCI; or the second information is a response message to the DCI or to a physical downlink shared channel (PDSCH) scheduled by the DCI.

In addition, according to at least one embodiment of the disclosure, obtaining the first information includes: obtaining the RRC configuration of the first cell, and obtaining a measurement reference signal; obtaining a measurement result by measuring the measurement reference signal received; sending the measurement result to a network equipment; and obtaining the first information sent by the network equipment.

In addition, according to at least one embodiment of the disclosure, the method further includes: performing data transmission with the first cell in at least one of following situations: a situation indicating to switch to the first cell; a situation indicating to activate the RRC configuration of the first cell; or a situation indicating to apply the RRC configuration of the first cell.

At least one embodiment of the disclosure provides a method for sending information, applied to a network equipment. The method includes: sending first information; in which the first information is carried by an MAC CE or DCI; the first information indicates at least one of: whether to switch to a first cell; whether to activate an RRC configuration of the first cell; or whether to apply the RRC configuration of the first cell; in which the first cell is a candidate target cell.

In addition, according to at least one embodiment of the disclosure, in the case of the first information being carried by the MAC CE, the first information includes: a cell index; or a configuration index; the cell index or the configuration index indicates a first cell to be switched to, a first cell with the RRC configuration to be activated, or a first cell with the RRC configuration to be applied.

In addition, according to at least one embodiment of the disclosure, in the case of the first information being carried by the DCI, the first information corresponds to at least one first field in the DCI.

In addition, according to at least one embodiment of the disclosure, the DCI further includes at least one second field; and the at least one second field indicates: a cell index; or a configuration index; the cell index or the configuration index indicates a first cell to be switched to, a first cell with the RRC configuration to be activated, or a first cell with the RRC configuration to be applied.

In addition, according to at least one embodiment of the disclosure, the method further includes: receiving second information, in which the second information is a response message to the first information.

In addition, according to at least one embodiment of the disclosure, in the case of the first information being carried by the MAC CE, the second information is received via the MAC CE; in the case of the first information being carried by the DCI, a resource used to receive the second information is indicated via the DCI; or the second information is a response message to the DCI or to a PDSCH scheduled by the DCI.

In addition, according to at least one embodiment of the disclosure, sending the first information includes: sending the RRC configuration of the first cell to a terminal; sending a measurement reference signal, in which the measurement reference signal is used by terminal to perform measurement and obtain a measurement result; receiving the measurement result from the terminal; and sending the first information to the terminal.

At least one embodiment of the disclosure provides an apparatus for receiving information. The apparatus includes: an obtaining unit, configured to obtain first information, in which the first information is carried by an MAC CE or DCI; the first information indicates at least one of: whether to switch to a first cell; whether to activate an RRC configuration of the first cell; or whether to apply the RRC configuration of the first cell; in which the first cell is a candidate target cell.

At least one embodiment of the disclosure provides an apparatus for sending information. The apparatus includes: a sending unit, configured to send first information; in which the first information is carried by an MAC CE or DCI; the first information indicates at least one of: whether to switch to a first cell; whether to activate an RRC configuration of the first cell; or whether to apply the RRC configuration of the first cell; in which the first cell is a candidate target cell.

At least one embodiment of the disclosure provides a terminal. The terminal includes a processor and a memory storing a computer program executable by the processor, in which when the computer program is executed by the processor, steps of any one of methods on the terminal side are implemented.

At least one embodiment of the disclosure provides a network equipment. The network equipment includes a processor and a memory storing a computer program executable by the processor, in which when the computer program is executed by the processor, steps of any one of methods on the terminal side are implemented.

In the method and the apparatus for receiving information, the method and the apparatus for sending information, the device, and the storage medium provided by the embodiments of the disclosure, the first information is obtained. The first information is carried by the MAC CE or the DCI. The first information indicates at least one of: whether to switch to the first cell; whether to activate the RRC configuration of the first cell; or whether to apply the RRC configuration of the first cell; in which the first cell is a candidate target cell. By adopting the technical solutions provided in the embodiments of the disclosure, cell switching indication is performed based on layer 1 (L1) signaling or layer 2 (L2) signaling. Compared with a method for handover indication based on layer 3 (L3) signaling in the related art, L1 measurement is generally an instantaneous measurement or a short term measurement, with a short transmission time based on the L1 signaling or the L2 signaling, and L3 handover is completed based on a measurement quantity of the L3 and the L3 signaling, with a long measurement time and a long signaling transmission time. Thus, cell switching based on the L1 or the L2 may significantly reduce the latency of the procedure.

### BRIEF DESCRIPTION OF THE DRAWINGS

FIG. 1 is a schematic diagram illustrating selection of a beam to serve a UE from a non-serving cell by a serving cell in the related art.
FIG. 2 is a schematic diagram illustrating handover based on L3 signaling in the related art.
FIG. 3 is a flow chart illustrating a method for receiving information according to an embodiment of the disclosure.
FIG. 4 is a flow chart illustrating a method for sending information according to an embodiment of the disclosure.
FIG. 5 is a flow chart illustrating a specific implementation of a method for receiving information and a method for sending information according to an embodiment of the disclosure.
FIG. 6 is a structural block diagram illustrating an apparatus for receiving information according to an embodiment of the disclosure.
FIG. 7 is a structural block diagram illustrating an apparatus for sending information according to an embodiment of the disclosure.
FIG. 8 is a structural block diagram illustrating a terminal according to an embodiment of the disclosure.
FIG. 9 is a structural block diagram illustrating a network equipment according to an embodiment of the disclosure.

### DETAILED DESCRIPTION

Before technical solutions of embodiments of the disclosure are described, the related art is described first.

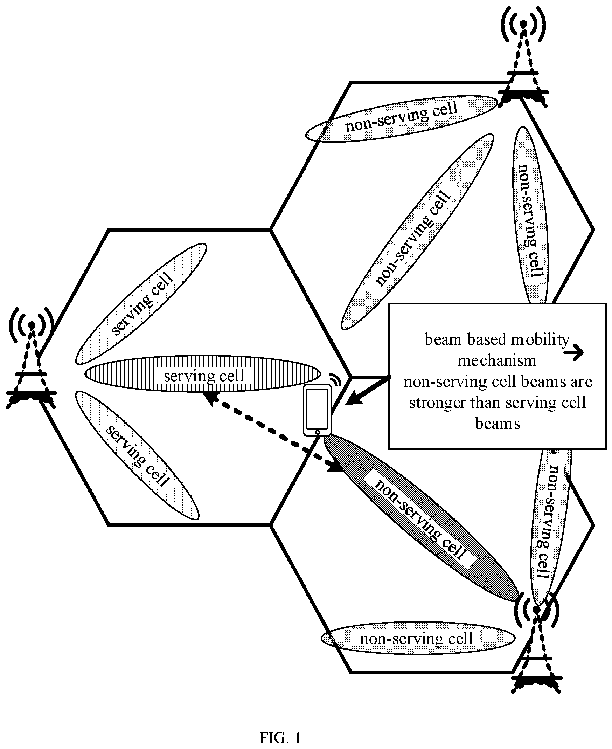

In the related art, an inter-cell beam management is studied in R17, where it is supported that a synchronization signal block (SSB) of a non-serving cell is configured as a reference signal for beam measurement. A user equipment (UE) may report a layer 1-reference signal receiving power (L1-RSRP) measurement result of the SSB of the non-serving cell. FIG. 1 is a schematic diagram illustrating selection of a beam to serve a UE from a non-serving cell by a serving cell in the related art. In future R18, an inter-cell mobility mechanism based on L1/layer 2 (L2) will be performed. That is, cell switching is accomplished based on L1/L2 signaling to reduce the latency of the procedure, and synchronous and asynchronous scenarios, intra-frequency and inter-frequency scenarios are considered.

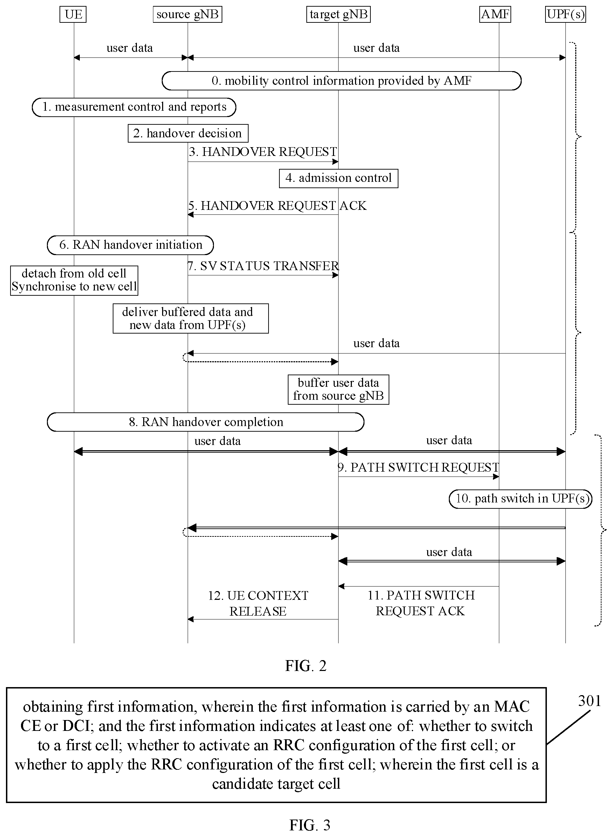

FIG. 2 is a schematic diagram illustrating handover based on L3 signaling in the related art. As shown in FIG. 2, at step 8, a radio access network (RAN) handover is completed, i.e., the UE achieves synchronization with the target cell. The UE completes a radio resource control (RRC) re-establishment and sends a RRC reconfiguration complete message to a network side, representing that the RRC re-establishment is completed, and the UE may communicate with a target base station.

In summary, the handover in the related art is implemented based on the L3 signaling. After the RRC re-establishment is completed, the UE needs to send the RRC signaling (i.e., RRC reconfiguration complete) to the target base station. This does not involve how cell switching is implemented based on L1/L2 signaling.

Based on the above, in the embodiments of the disclosure, first information is obtained. The first information is carried by an MAC CE or DCI. The first information indicates at least one of: whether to switch to a first cell; whether to activate an RRC configuration of the first cell; or whether to apply the RRC configuration of the first cell; in which the first cell is a candidate target cell.

FIG. 3 is a flow chart illustrating a method for receiving information according to an embodiment of the disclosure. The method is applied to a terminal. As shown in FIG. 3, the method includes a step 301.

At step 301: first information is obtained; in which the first information is carried by an MAC CE or DCI; the first information indicates at least one of: whether to switch to a first cell; whether to activate an RRC configuration of the first cell; or whether to apply the RRC configuration of the first cell; in which the first cell is a candidate target cell.

It may be understood that the candidate target cell may also be referred to as a target cell.

That is, the first information indicates whether the terminal switches to the first cell. Alternatively, the first information indicates whether the terminal activates the RRC configuration of the first cell and switches to the first cell. Alternatively, the first information indicates whether the terminal applies the RRC configuration of the first cell and switches to the first cell. Alternatively, the first information indicates whether the terminal activates the RRC configuration of the first cell. Alternatively, the first information indicates whether the terminal applies the RRC configuration of the first cell.

In an embodiment, in the case that the first information is carried by the MAC CE, the first information includes: a cell index; or a configuration index. The cell index or the configuration index indicates a first cell to be switched to, a first cell with the RRC configuration to be activated, or a first cell with the RRC configuration to be applied.

That is, the cell index indicates the first cell to be switched to, the first cell with the RRC configuration to be activated, or the first cell with the RRC configuration to be applied.

Similarly, the configuration index indicates the first cell to be switched to, the first cell with the RRC configuration to be activated, or the first cell with the RRC configuration to be applied.

In an embodiment, in the case that the first information is carried by the DCI, the first information corresponds to at least one first field in the DCI.

That is, in the case that the first information is carried by the DCI, the first information may correspond to one first field in the DCI; or, the first information may also correspond to a plurality of first fields in the DCI.

Further, the first cell to be switched to, the first cell with the RRC configuration to be activated, or the first cell with the RRC configuration to be applied may be indicated by a field value of the first field.

For example, in the case that the first information corresponds to one first field in the DCI, if the field value of the first field is 0, it indicated that an identifier of the first cell to be switched to, the first cell with the RRC configuration to be activated, or the first cell with the RRC configuration to be applied is cell 0; and if the field value of the first field is 1, it indicated that an identifier of the first cell to be switched to, the first cell with the RRC configuration to be activated, or the first cell with the RRC configuration to be applied is cell 1.

In an embodiment, the DCI further includes at least one second field; and the at least one second field indicates: a cell index; or a configuration index. The cell index or the configuration index indicates the first cell to be switched to, the first cell with the RRC configuration to be activated, or the first cell with the RRC configuration to be applied.

That is, the cell index indicates the first cell to be switched to, the first cell with the RRC configuration to be activated, or the first cell with the RRC configuration to be applied.

Similarly, the configuration index indicates the first cell to be switched to, the first cell with the RRC configuration to be activated, or the first cell with the RRC configuration to be applied.

In an embodiment, the method further includes: sending second information to a network equipment, in which the second information is a response message to the first information.

It may be understood that the second information is the response message to the first information, which may include the following situations.

In a first situation, when the first information indicates whether to switch to the first cell, the second information indicates whether the first information is received.

When the first information indicates the terminal to switch to the first cell, if the terminal replies with an ACK, it indicates that the first information is received and the terminal switches to the first cell. If the terminal replies with a NACK, it indicates that the first information is not received.

When the first information indicates the terminal not to switch to the first cell, if the terminal replies with an ACK, it indicates that the first information is received and the terminal does not switch to the first cell. If the terminal replies with a NACK, it indicates that the first information is not received.

In a second situation, when the first information indicates whether to activate the RRC configuration of the first cell, the second information indicates whether the RRC configuration of the first cell is activated.

When the first information indicates the terminal to activate the RRC configuration of the first cell, if the terminal replies with an ACK, it indicates that the RRC configuration of the first cell is activated. If the terminal replies with a NACK, it indicates that the RRC configuration of the first cell is not activated.

When the first information indicates the terminal not to activate the RRC configuration of the first cell, if the terminal replies with an ACK, it indicates that the first information is received and the RRC configuration of the first cell is not activated. If the terminal replies with a NACK, it indicates that the first information is not received.

In a third situation, when the first information indicates whether to apply the RRC configuration of the first cell, the second information indicates whether the RRC configuration of the first cell is applied.

When the first information indicates the terminal to apply the RRC configuration of the first cell, if the terminal replies with an ACK, it indicates that the RRC configuration of the first cell is applied. If the terminal replies with a NACK, it indicates that the RRC configuration of the first cell is not applied or the first information is not received.

When the first information indicates the terminal not to apply the RRC configuration of the first cell, if the terminal replies with an ACK, it indicates that the first information is received and the RRC configuration of the first cell is not applied. If the terminal replies with a NACK, it indicates that the first information is not received.

In a fourth situation, when the first information indicates whether to activate the RRC configuration of the first cell and whether to switch to the first cell, the second information indicates whether the RRC configuration of the first cell is activated and whether the terminal switches to the first cell.

When the first information indicates the terminal to activate the RRC configuration of the first cell and switch to the first cell, if the terminal replies with an ACK, it indicates that the terminal switches to the first cell and the RRC configuration of the first cell is activated. If the terminal replies with a NACK, it indicates that the terminal fails to switch to the first cell or the RRC configuration of the first cell is not activated.

When the first information indicates the terminal not to activate the RRC configuration of the first cell or not switch to the first cell, if the terminal replies with an ACK, it indicates that the terminal fails to switch to the first cell or the RRC configuration of the first cell is not activated. If the terminal replies with a NACK, it indicates that the first information is not received.

In a fifth situation, when the first information indicates whether to apply the RRC configuration of the first cell and switch to the first cell, the second information indicates whether the RRC configuration of the first cell is applied and whether the terminal switches to the first cell.

When the first information indicates the terminal to apply the RRC configuration of the first cell and switch to the first cell, if the terminal replies with an ACK, it indicates that the terminal switches to the first cell and the RRC configuration of the first cell is applied. If the terminal replies with a NACK, it indicates that the terminal fails to switch to the first cell or the RRC configuration of the first cell is not applied.

When the first information indicates the terminal not to apply the RRC configuration of the first cell or not switch to the first cell, if the terminal replies with an ACK, it indicates that the terminal fails to switch to the first cell or the RRC configuration of the first cell is not applied. If the terminal replies with a NACK, it indicates that the first information is not received.

In an embodiment, in the case that the first information is carried by the MAC CE, the second information is sent via the MAC CE; in the case that the first information is carried by the DCI, a resource used to send the second information is indicated via the DCI; or the second information is a response message to the DCI or to a physical downlink shared channel (PDSCH) scheduled by the DCI.

It may be understood that the response message may refer to the ACK or the NACK.

In an embodiment, obtaining the first information includes: obtaining the RRC configuration of the first cell, and obtaining a measurement reference signal; obtaining a measurement result by measuring the measurement reference signal received; sending the measurement result to a network equipment; and obtaining the first information sent by the network equipment.

It may be understood that a network equipment of a current cell in which the terminal is located may send the RRC configuration of the first cell to the terminal.

It may be understood that the network equipment of the current cell in which the terminal is located may send the measurement reference signal to the terminal; or the network equipment in which the first cell is located may also send the measurement reference signal to the terminal.

It may be understood that the network equipment in which the terminal is currently located may receive the measurement information from the terminal and send the first information to the terminal.

In an embodiment, the method further includes: performing data transmission with the first cell in at least one of following situations: a situation indicating to switch to the first cell; a situation indicating to activate the RRC configuration of the first cell; or a situation indicating to apply the RRC configuration of the first cell.

Embodiments of the disclosure have the following advantages.
(1) cell switching indication is performed based on L1 signaling or L2 signaling, which is capable of reducing the latency of the procedure, compared with the method for handover indication via L3 signaling in the related art. The L3 handover is completed based on a measurement quantity of the L3 and the L3 signaling, with a long measurement time and a long signaling transmission time. The L1 measurement is generally an instantaneous measurement or a short term measurement, with a short transmission time based on the L1 signaling or the L2 signaling. Thus, cell switching based on the L1 or the L2 may significantly reduce the latency of the procedure.
(2) the terminal is indicated to switch to the candidate target cell based on the L1/L2 signaling. The terminal may confirm the first information via the second information, and consider confirmation in two cases with RRC reconfiguration and without the RRC reconfiguration.

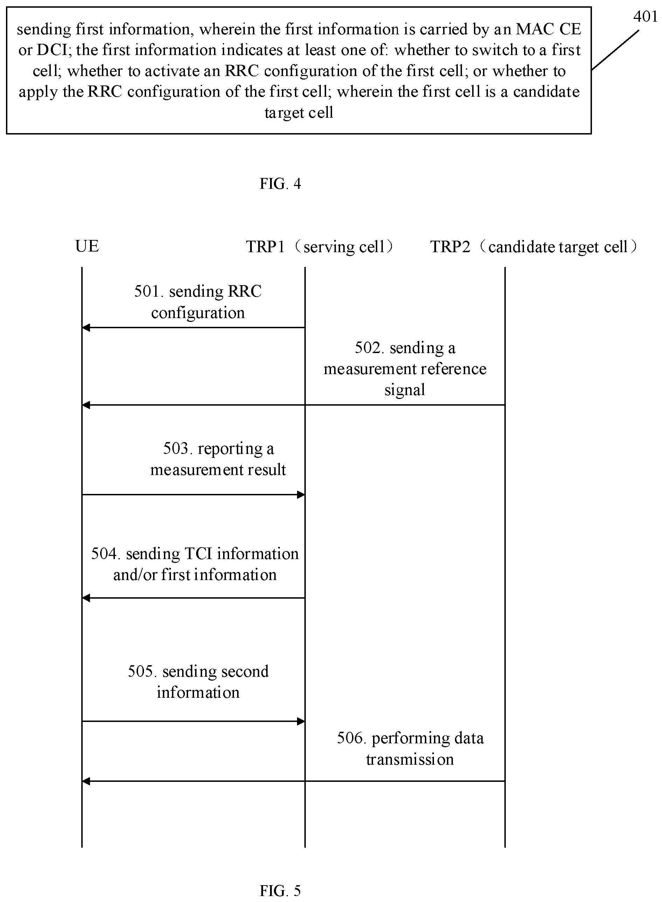

FIG. 4 is a flow chart illustrating a method for sending information according to an embodiment of the disclosure. The method is applied to a network equipment. As shown in FIG. 4, the method includes the step 401.

At step 401: first information is sent, in which the first information is carried by an MAC CE or DCI; the first information indicates at least one of: whether to switch to a first cell; whether to activate an RRC configuration of the first cell; or whether to apply the RRC configuration of the first cell; in which the first cell is a candidate target cell.

It may be understood that the candidate target cell may also be referred to as a target cell.

That is, the first information indicates whether the terminal switches to the first cell. Alternatively, the first information indicates whether the terminal activates the RRC configuration of the first cell and switches to the first cell. Alternatively, the first information indicates whether the terminal applies the RRC configuration of the first cell and switches to the first cell. Alternatively, the first information indicates whether the terminal activates the RRC configuration of the first cell. Alternatively, the first information indicates whether the terminal applies the RRC configuration of the first cell.

In an embodiment, in the case that the first information is carried by the MAC CE, the first information includes: a cell index; or a configuration index. The cell index or the configuration index indicates a first cell to be switched to, a first cell with the RRC configuration to be activated, or a first cell with the RRC configuration to be applied.

That is, the cell index indicates the first cell to be switched to, the first cell with the RRC configuration to be activated, or the first cell with the RRC configuration to be applied.

Similarly, the configuration index indicates the first cell to be switched to, the first cell with the RRC configuration to be activated, or the first cell with the RRC configuration to be applied.

In an embodiment, in the case that the first information is carried by the DCI, the first information corresponds to at least one first field in the DCI.

That is, in the case that the first information is carried by the DCI, the first information may correspond to one first field in the DCI; or, the first information may also correspond to a plurality of first fields in the DCI.

Further, the first cell to be switched to, the first cell with the RRC configuration to be activated, or the first cell with the RRC configuration to be applied may be indicated by a field value of the first field.

In an embodiment, the DCI further includes at least one second field; and the at least one second field indicates: a cell index; or a configuration index. The cell index or the configuration index indicates the first cell to be switched to, the first cell with the RRC configuration to be activated, or the first cell with the RRC configuration to be applied.

That is, the cell index indicates the first cell to be switched to, the first cell with the RRC configuration to be activated, or the first cell with the RRC configuration to be applied.

Similarly, the configuration index indicates the first cell to be switched to, the first cell with the RRC configuration to be activated, or the first cell with the RRC configuration to be applied.

In an embodiment, the method further includes: receiving second information, in which the second information is a response message to the first information.

In an embodiment, in the case that the first information is carried by the MAC CE, the second information is received via the MAC CE; in the case that the first information is carried by the DCI, a resource used to receive the second information is indicated via the DCI; or the second information is a response message to the DCI or to a PDSCH scheduled by the DCI.

It may be understood that the response message may refer to an ACK or a NACK.

In an embodiment, sending the first information includes: sending the RRC configuration of the first cell to a terminal; sending a measurement reference signal, in which the measurement reference signal is used by terminal to perform measurement and obtain a measurement result; receiving the measurement result from the terminal; and sending the first information to the terminal.

It may be understood that a network equipment of a current cell in which the terminal is located may send the RRC configuration of the first cell to the terminal.

It may be understood that the network equipment of the current cell in which the terminal is located may send the measurement reference signal to the terminal; or the network equipment in which the first cell is located may also send the measurement reference signal to the terminal.

It may be understood that the network equipment in which the terminal is currently located may receive the measurement information from the terminal and send the first information to the terminal.

Embodiments of the disclosure have the following advantages.
(1) switching indication is performed based on L1 signaling or L2 signaling, which is capable of reducing the latency of the procedure, compared with the method for handover indication via L3 signaling in the related art. The L3 handover is completed based on a measurement quantity of the L3 and the L3 signaling, with a long measurement time and a long signaling transmission time. The L1 measurement is generally an instantaneous measurement or a short term measurement, with a short transmission time based on the L1 signaling or the L2 signaling. Thus, cell switching based on the L1 or the L2 may significantly reduce the latency of the procedure.
(2) the terminal is indicated to switch to the candidate target cell based on the L1/L2 signaling. The terminal may confirm the first information via the second information, and consider confirmation in two cases of needing RRC reconfiguration and not needing the RRC reconfiguration.

FIG. 5 is a flow chart illustrating a specific implementation of a method for receiving information and a method for sending information according to an embodiment of the disclosure. For example, a first cell is a candidate target cell, a network equipment is a base station, and a terminal is a UE. As shown in FIG. 5, the method includes the following steps 501 to 506.

At step 501: the base station in which a serving cell (TRP1) is located sends an RRC configuration of the candidate target cell (TRP2) to the UE.

At step 502: the base station in which the candidate target cell (TRP2) is located sends a measurement reference signal to the UE.

In this case, the base station in which the serving cell (TRP1) is located and/or the base station in which the candidate target cell (TRP2) is located may send the measurement reference signal to the UE.

At step 503: the UE receives the RRC configuration and the measurement reference signal, measures the measurement reference signal, and reports a measurement result to the base station in which the service cell (TRP1) is located.

At step 504: the base station in which the serving cell (TRP1) is located receives the measurement result and sends transmission configuration indication (TCI) information and/or first information to the UE.

The first information indicates at least one of: whether to switch to a first cell; whether to activate an RRC configuration of the first cell; or whether to apply the RRC configuration of the first cell.

In this case, in order to reduce the latency of the procedure, the first information may be carried by a MAC CE or DCI.

In the case that the first information is carried by the MAC CE, the first information includes: a cell index; or a configuration index. The cell index or the configuration index indicates a first cell to be switched to, a first cell with the RRC configuration to be activated, or a first cell with the RRC configuration to be applied.

In the case that the first information is carried by the DCI, the first information corresponds to at least one first field in the DCI.

In this case, the candidate target cell to be switched to, the candidate target cell with the RRC configuration to be activated, or the candidate target cell with the RRC configuration to be applied may be indicated by a field value of the at least one first field in the DCI.

In this case, the DCI further includes at least one second field; and the at least one second field indicates: a cell index; or a configuration index. The cell index or the configuration index indicates the first cell to be switched to, the first cell with the RRC configuration to be activated, or the first cell with the RRC configuration to be applied.

At step 505: the UE sends second information to the base station in which the serving cell (TRP1) is located.

In this case, when the TRP1 only sends the TCI information to the serving cell, the UE receives data based on the TCI information.

In the case that the first information is carried by the MAC CE, the second information is sent via the MAC CE; in the case that the first information is carried by the DCI, a resource used to send the second information is indicated via the DCI; or the second information is a response message to the DCI or to a PDSCH scheduled by the DCI.

At step 506: the base station in which the candidate target cell (TRP2) is located performs data transmission with the UE.

In this case, if the second information indicates that the RRC reconfiguration needs to be updated, the RRC configuration corresponding to the candidate target cell is applied after X time units. Thus, the base station in which the candidate target cell (TRP2) is located performs the data transmission with the UE. A value of X may depend on UE capability and interaction time between the serving cell (TRP1) and the candidate target cell (TRP2).

In this case, if the second information indicates that the RRC reconfiguration does not need to be updated, a new RRC configuration does not need to be applied.

Embodiments of the disclosure have the following advantages.

(1) cell switching indication is performed based on L1 signaling or L2 signaling, which is capable of reducing the latency of the procedure, compared with the method for handover indication via L3 signaling in the related art. The L3 handover is completed based on a measurement quantity of the L3 and the L3 signaling, with a long measurement time and a long signaling transmission time. The L1 measurement is generally an instantaneous measurement or a short term measurement, with a short transmission time based on the L1 signaling or the L2 signaling. Thus, cell switching based on the L1 or the L2 may significantly reduce the latency of the procedure.

(2) the terminal is indicated to switch to the candidate target cell based on the L1/L2 signaling. The terminal may confirm the first information via the second information, and consider confirmation in two cases of needing RRC reconfiguration and not needing the RRC reconfiguration.

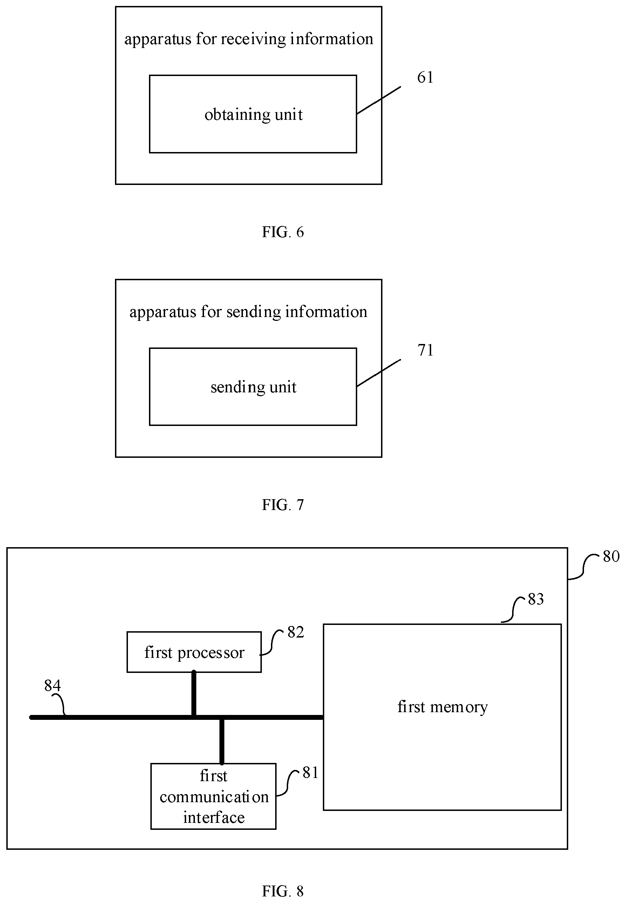

In order to realize the method for receiving information according to the embodiments of the disclosure, embodiments of the disclosure also provide an apparatus for receiving information. FIG. 6 is a structural block diagram illustrating an apparatus for receiving information according to an embodiment of the disclosure. As shown in FIG. 6, the apparatus includes an obtaining unit 61.

The obtaining unit 61 is configured to obtain first information, in which the first information is carried by an MAC CE or DCI; and the first information indicates at least one of: whether to switch to a first cell; whether to activate an RRC configuration of the first cell; or whether to apply the RRC configuration of the first cell; in which the first cell is a candidate target cell.

In an embodiment, in the case that the first information is carried by the MAC CE, the first information includes: a cell index; or a configuration index. The cell index or the configuration index indicates a first cell to be switched to, a first cell with the RRC configuration to be activated, or a first cell with the RRC configuration to be applied.

In an embodiment, in the case that the first information is carried by the DCI, the first information corresponds to at least one first field in the DCI.

In an embodiment, the DCI further includes at least one second field; and the at least one second field indicates: a cell index; or a configuration index. The cell index or the configuration index indicates the first cell to be switched to, the first cell with the RRC configuration to be activated, or the first cell with the RRC configuration to be applied.

In an embodiment, the apparatus is further configured to: send second information to a network equipment, in which the second information is a response message to the first information.

In an embodiment, in the case that the first information is carried by the MAC CE, the second information is sent via the MAC CE; in the case that the first information is carried by the DCI, a resource used to send the second information is indicated via the DCI; or the second information is a response message to the DCI or to a PDSCH scheduled by the DCI.

In an embodiment, the obtaining unit 61 is specifically configured to: obtain the RRC configuration of the first cell, and obtain a measurement reference signal; obtain a measurement result by measuring the measurement reference signal received; send the measurement result to a network equipment; and obtain the first information sent by the network equipment.

In an embodiment, the apparatus is further configured to: perform data transmission with the first cell in at least one of following situations: a situation indicating to switch to the first cell; a situation indicating to activate the RRC configuration of the first cell; or a situation indicating to apply the RRC configuration of the first cell.

In practical application, the obtaining unit 61 may be implemented by a communication interface in the apparatus for receiving information.

It should be noted that the apparatus for receiving information provided in the above embodiments is only exemplified by the division of each of the above-described program modules when receiving information. In practical applications, the above processing may be assigned to be completed by different program modules as needed, i.e., the internal structure of the apparatus may be divided into different program modules to complete all or part of the above processing. In addition, the apparatus for receiving information provided in the above embodiments belongs to a same concept as the embodiments of the method for receiving information. The specific implementation process is described in detail in the embodiments of the method, and will not be repeated herein.

In order to realize the method for sending information according to the embodiments of the disclosure, embodiments of the disclosure also provide an apparatus for sending information. FIG. 7 is a structural block diagram illustrating an apparatus for sending information according to an embodiment of the disclosure. As shown in FIG. 7, the apparatus includes a sending unit 71.

The sending unit 71 is configured to send first information; in which the first information is carried by an MAC CE or DCI; the first information indicates at least one of: whether to switch to a first cell; whether to activate an RRC configuration of the first cell; or whether to apply the RRC configuration of the first cell; in which the first cell is a candidate target cell.

In an embodiment, in the case that the first information is carried by the MAC CE, the first information includes: a cell index; or a configuration index. The cell index or the configuration index indicates a first cell to be switched to, a first cell with the RRC configuration to be activated, or a first cell with the RRC configuration to be applied.

In an embodiment, in the case that the first information is carried by the DCI, the first information corresponds to at least one first field in the DCI.

In an embodiment, the DCI further includes at least one second field; and the at least one second field indicates: a cell index; or a configuration index. The cell index or the configuration index indicates the first cell to be switched to, the first cell with the RRC configuration to be activated, or the first cell with the RRC configuration to be applied.

In an embodiment, the apparatus is further configured to: receive second information, in which the second information is a response message to the first information.

In an embodiment, in the case that the first information is carried by the MAC CE, the second information is received via the MAC CE; in the case that the first information is carried by the DCI, a resource used to receive the second information is indicated via the DCI; or the second information is a response message to the DCI or to a PDSCH scheduled by the DCI.

In an embodiment, the sending unit 71 is specifically configured to send the RRC configuration of the first cell to a terminal; send a measurement reference signal, in which the measurement reference signal is used by terminal to perform measurement and obtain a measurement result; receive the measurement result from the terminal; and send the first information to the terminal.

In practical application, the sending unit 71 may be implemented by a communication interface in the apparatus for receiving information.

It should be noted that the apparatus for sending information provided in the above embodiments is only exemplified by the division of each of the above-described program modules when sending information. In practical applications, the above processing may be assigned to be completed by different program modules as needed, i.e., the internal structure of the apparatus may be divided into different program modules to complete all or part of the above processing. In addition, the apparatus for sending information provided in the above embodiments belongs to a same concept as the embodiments of the method for sending information. The specific implementation process is described in detail in the embodiments of the method, and will not be repeated herein.

Embodiments of the disclosure further provide a terminal. As shown in FIG. 8, the terminal includes a first communication interface 81, a first processor 82, a first memory 83 and a bus system 84.

The first communication interface 81 is capable of performing information interaction with other devices.

The first processor 82 is connected to the first communication interface 81, configured to execute the method provided by one or more technical solutions on the terminal side as described above when a computer program is executed. The computer program is stored on the first memory 83.

It should be noted that the specific processes of the first processor 82 and the first communication interface 81 are detailed in the method embodiments and are not repeated herein.

In practice, the various components in the terminal 80 are coupled together via the bus system 84. It should be understood that the bus system 84 is configured to realize the connection communication between the components. The bus system 84 includes a power bus, a control bus, and a status signal bus in addition to a data bus. However, for clarity of illustration, the various buses are labeled as the bus system 84 in FIG. 8.

In embodiments of the disclosure, the first memory 83 is configured to store various types of data to support the operation of the terminal 80. Examples of such data include any computer program configured to operate on the terminal 80.

The method disclosed in embodiments of the disclosure may be applied to the first processor 82 or implemented by the first processor 82. The first processor 82 may be an integrated circuit chip with a signal processing capability. In an implementation process, each step of the above method may be completed by an integrated logic circuit of hardware or instructions in the form of software in the first processor 82. The first processor 82 above may be a general processor, a digital signal processor (DSP), or other programmable logic devices, discrete gate or transistor logic devices, discrete hardware components, and the like. The first processor 82 may implement or execute the methods, steps and logic blocks disclosed in embodiments of the disclosure. The general processor may be a microprocessor or any conventional processor, etc. The steps of the method disclosed in embodiments of the disclosure may be executed and completed by a hardware decoding processor which is embodied directly or by a combination of hardware and software modules in the decoding processor. The software module may be located in a storage medium. The storage medium is located in the first memory 83. The first processor 82 reads the information in the first memory 83, and completes the steps of the above method in combination with the hardware.

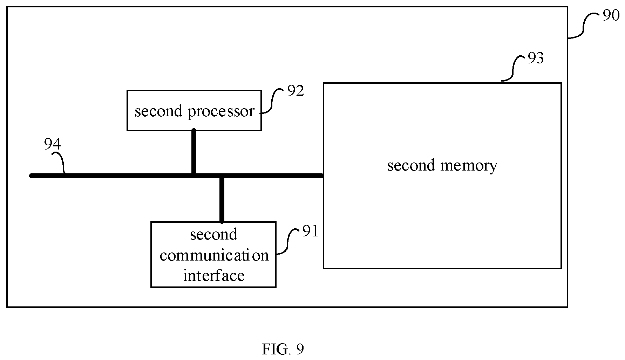

Embodiments of the disclosure further provide a network equipment. As shown in FIG. 9, the network equipment includes a second communication interface 91, a second processor 92, a second memory 93 and a bus system 94.

The second communication interface 91 is capable of performing information interaction with other devices.

The second processor 92 is connected to the second communication interface 91, configured to execute the method provided by one or more technical solutions on the network equipment side as described above when a computer program is executed. The computer program is stored on the second memory 93.

It should be noted that the specific processes of the second processor 92 and the second communication interface 91 are detailed in the method embodiments and are not repeated herein.

In practice, the various components in the network equipment 90 are coupled together via the bus system 94. It should be understood that the bus system 94 is configured to realize the connection communication between the components. The bus system 94 includes a power bus, a control bus, and a status signal bus in addition to a data bus. However, for clarity of illustration, the various buses are labeled as the bus system 94 in FIG. 9.

In embodiments of the disclosure, the second memory 93 is configured to store various types of data to support the operation of the network equipment 90. Examples of such data include any computer program configured to operate on the network equipment 90.

The method disclosed in embodiments of the disclosure may be applied to the second processor 92 or implemented by the second processor 92. The second processor 92 may be an integrated circuit chip with a signal processing capability. In an implementation process, each step of the above method may be completed by an integrated logic circuit of hardware or instructions in the form of software in the second processor 92. The second processor 92 above may be a general processor, a digital signal processor (DSP), or other programmable logic devices, discrete gate or transistor logic devices, discrete hardware components, and the like. The second processor 92 may implement or execute the methods, steps and logic blocks disclosed in embodiments of the disclosure. The general processor may be a microprocessor or any conventional processor, etc. The steps of the method disclosed in embodiments of the disclosure may be executed and completed by a hardware decoding processor which is embodied directly or by a combination of hardware and software modules in the decoding processor. The software module may be located in a storage medium. The storage medium is located in the second memory 93. The second processor 92 reads the information in the second memory 93, and completes the steps of the above method in combination with the hardware.

In an exemplary embodiment, the terminal 80 and the network equipment 90 may be implemented by one or more application specific integrated circuits (ASICs), DSPs, programmable logic devices (PLDs), complex programmable logic devices (CPLDs), field-programmable gate arrays (FPGAs), general-purpose processors, controllers, micro controller units (MCUs), microprocessors, or other electronic component, for executing the above methods.

It may be understood that, the memories (the first memory 83 and the second memory 93) in the embodiments of the disclosure may be volatile or nonvolatile memories, and may also include both the volatile and nonvolatile memories. The nonvolatile memory may be a read only memory (ROM), a programmable read only memory (PROM), an erasable programmable read only memory (EPROM), an electrically erasable programmable read-only memory (EEPROM), a ferromagnetic random access memory (FRAM), a flash memory, a magnetic surface memory, an optical disk, or a compact disc read-only memory (CD-ROM). The magnetic surface memory may be a magnetic disk memory or a magnetic tape memory. The volatile memory may be a random access memory (RAM), which is used as an external cache. By way of illustration, but not limitation, multiple forms of RAMs are available, such as a static random access memory (SRAM), a synchronous static random access memory (SSRAM), a dynamic random access memory (DRAM), a synchronous dynamic random access memory (SDRAM), a double data rate synchronous dynamic random access memory (DDRSDRAM), an enhanced synchronous dynamic random access memory (ESDRAM), a syncLink dynamic random access memory (SLDRAM), and a direct rambus random access memory (DRRAM). The memories described in embodiments of the disclosure are intended to include, but not limited to, these and any other suitable types of memories.

In an exemplary embodiment, embodiments of the disclosure also provide a storage medium, that is, a computer storage medium, specifically a computer-readable storage medium. For example, the storage medium includes a memory storing the computer program. The above computer program may be executed by the first processor 82 of the terminal 80 to complete the steps of the method in the first terminal side. The computer-readable storage medium may be a memory such as the FRAM, the ROM, the PROM, the EPROM, the EEPROM, the flash memory, the magnetic surface memory, the optical disk, the CD-ROM or the like.

It should be noted that, the term "first" and "second" are used to distinguish similar objects, and are not necessarily used to describe a specific order or sequence.

In addition, the technical solutions described in embodiments of the disclosure may be arbitrarily combined without conflict.

The above is only preferable embodiments of the disclosure, and is not used to limit the protection scope of the disclosure.

## Claims

1. A method for receiving information, applied to a terminal, comprising:
obtaining first information, wherein the first information is carried by a medium access control (MAC) control element (CE) or downlink control information (DCI);
the first information indicates at least one of:
whether to switch to a first cell;
whether to activate a radio resource control (RRC) configuration of the first cell; or
whether to apply the RRC configuration of the first cell;
wherein the first cell is a candidate target cell.

2. The method according to claim 1, wherein in the case of the first information being carried by the MAC CE, the first information comprises:
a cell index; or
a configuration index;
the cell index or the configuration index indicates a first cell to be switched to, a first cell with the RRC configuration to be activated, or a first cell with the RRC configuration to be applied.

3. The method according to claim 1, wherein in the case of the first information being carried by the DCI, the first information corresponds to at least one first field in the DCI.

4. The method according to claim 3, wherein the DCI further comprises at least one second field; and the at least one second field indicates:
a cell index; or
a configuration index;
the cell index or the configuration index indicates a first cell to be switched to, a first cell with the RRC configuration to be activated, or a first cell with the RRC configuration to be applied.

5. The method according to claim 1, further comprising:
sending second information to a network equipment,
wherein the second information is a response message to the first information.

6. The method according to claim 5, wherein
in the case of the first information being carried by the MAC CE, the second information is sent via the MAC CE; or
in the case of the first information being carried by the DCI, a resource used to send the second information is indicated via the DCI; or
the second information is a response message to the DCI or to a physical downlink shared channel (PDSCH) scheduled by the DCI.

7. The method according to claim 1, wherein obtaining the first information comprises:
obtaining the RRC configuration of the first cell, and obtaining a measurement reference signal;
obtaining a measurement result by measuring the measurement reference signal received;
sending the measurement result to a network equipment; and
obtaining the first information sent by the network equipment.

8. The method according to claim 1, further comprising:
performing data transmission with the first cell in at least one of following situations:
a situation indicating to switch to the first cell;
a situation indicating to activate the RRC configuration of the first cell; or
a situation indicating to apply the RRC configuration of the first cell.

9. A method for sending information, applied to a network equipment, comprising:
sending first information; wherein the first information is carried by a medium access control (MAC) control element (CE) or downlink control information (DCI);
the first information indicates at least one of:
whether to switch to a first cell;
whether to activate a radio resource control (RRC) configuration of the first cell; or
whether to apply the RRC configuration of the first cell;
wherein the first cell is a candidate target cell.

10. The method according to claim 9, wherein in the case of the first information being carried by the MAC CE, the first information comprises:
a cell index; or
a configuration index;
the cell index or the configuration index indicates a first cell to be switched to, a first cell with the RRC configuration to be activated, or a first cell with the RRC configuration to be applied.

11. The method according to claim 9, wherein in the case of the first information being carried by the DCI, the first information corresponds to at least one first field in the DCI.

12. The method according to claim 11, wherein the DCI further comprises at least one second field; and the at least one second field indicates:
a cell index; or
a configuration index;
the cell index or the configuration index indicates a first cell to be switched to, a first cell with the RRC configuration to be activated, or a first cell with the RRC configuration to be applied.

13. The method according to claim 9, further comprising:
receiving second information, wherein the second information is a response message to the first information.

14. The method according to claim 13, wherein
in the case of the first information being carried by the MAC CE, the second information is received via the MAC CE; or
in the case of the first information being carried by the DCI, a resource used to receive the second information is indicated via the DCI; or
the second information is a response message to the DCI or to a physical downlink shared channel (PDSCH) scheduled by the DCI.

15. The method according to claim 9, wherein sending the first information comprises:
sending the RRC configuration of the first cell to a terminal; sending a measurement reference signal, wherein the measurement reference signal is used by terminal to perform measurement and obtain a measurement result;
receiving the measurement result from the terminal; and
sending the first information to the terminal.

16. An apparatus for receiving information, comprising:
an obtaining unit, configured to obtain first information, wherein the first information is carried by a medium access control (MAC) control element (CE) or downlink control information (DCI);
the first information indicates at least one of:
whether to switch to a first cell;
whether to activate a radio resource control (RRC) configuration of the first cell; or
whether to apply the RRC configuration of the first cell;
wherein the first cell is a candidate target cell.

17. An apparatus for sending information, comprising:
a sending unit, configured to send first information, wherein the first information is carried by a medium access control (MAC) control element (CE) or downlink control information (DCI);
the first information indicates at least one of:
whether to switch to a first cell;
whether to activate a radio resource control (RRC) configuration of the first cell; or
whether to apply the RRC configuration of the first cell;
wherein the first cell is a candidate target cell.

18. A terminal, comprising a processor and a memory storing a computer program executable by the processor,
wherein when the computer program is executed by the processor, steps of the method according to any one of claims 1 to 8 are implemented.

19. A network equipment, comprising a processor and a memory storing a computer program executable by the processor,
wherein when the computer program is executed by the processor, steps of the method according to any one of claims 9 to 15 are implemented.

20. A computer-readable storage medium having stored a computer program that, when executed by a processor, implements steps of the method according to any one of claims 1 to 8 or steps of the method according to any one of claims 9 to 15.
